# NEUE EUROPÄISCHE PATENTSCHRIFT

(11) **EP 0 679 130 B2**
(45) Veröffentlichungstag und Bekanntmachung des Hinweises auf die Entscheidung über den Einspruch: **14.11.2001**
(45) Hinweis auf die Patenterteilung: 04.06.1997
(21) Anmeldenummer: 94902628.0
(22) Anmeldetag: 28.12.1993
(51) Int. Cl.: B60S 1/08, G01N 21/43, B60S 1/00

(54) **SENSOREINRICHTUNG ZUR ERFASSUNG DES BENETZUNGS- UND/ODER VERSCHMUTZUNGSGRADES VON SCHEIBEN, INSBESONDERE FRONTSCHEIBEN VON KRAFTFAHRZEUGEN**
SENSOR FOR DETERMINING THE DEGREE OF WETTING AND/OR SOILING OF A PANE OF GLASS, IN PARTICULAR THE WINDSCREEN OF A MOTOR VEHICLE
CAPTEUR POUR LA DETECTION DU NIVEAU D'HUMIDIFICATION ET/OU D'ENCRASSEMENT DES VITRES, EN PARTICULIER DU PARE-BRISE DE VEHICULES A MOTEUR

(30) Priorität: 13.01.1993 DE 4300655; 20.12.1993 DE 4343474
(43) Veröffentlichungstag der Anmeldung: 02.11.1995
(73) Patentinhaber: ROBERT BOSCH GMBH, 70442 Stuttgart (DE)
(72) Erfinder: SEILER, Hartmut, D-76532 Baden-Baden (DE); PIENTKA, Rainer, D-77855 Achern (DE); FEDTER, Horst, D-77830 Bühlertal (DE)
(86) Internationale Anmeldenummer: DE9301245
(87) Internationale Veröffentlichungsnummer: WO9415819

(56) Entgegenhaltungen:
- EP-A- 0 254 636
- EP-A- 0 299 606
- EP-A- 0 562 275
- DE-C- 3 823 300
- DE-C- 4 202 121

## Beschreibung

### Stand der Technik

Die Erfindung betrifft eine Sensoreinrichtung zur Erfassung des Benetzungs- und/oder Verschmutzungsgrads von Scheiben, insbesondere Frontscheiben von Kraftfahrzeugen, nach der Gattung des Hauptanspruchs.

Eine derartige, dem Oberbegriff des Anspruchs 1 entsprechende Sensoreinrichtung ist aus der EP-A-0 299 606 bekannt.

Aus der DE-A-38 23 300 und der DE-A-40 06 174 sind Sensoreinrichtungen bekannt, die nach dem Prinzip der abgeschwächten Totalreflexion arbeiten. Hierzu wird die von einer Strahlungsquelle ausgesandte Strahlung an der Scheiben-Außen- und -Innenfläche entlang einer Meßstrecke mehrfach reflektiert (Totalreflexion) und dann von einer Strahlungsmeßeinrichtung erfaßt. Schmutzpartikel oder Regentropfen an der Außenseite verhindern die Totalreflexion und schwächen daher die Reflexion im Scheiben-Innern, was eine durch die Strahlungsmeßëinrichtung erfaßbare Signalschwächung zur Folge hat. Unterhalb eines vorgebbaren Grenzwerts werden dann beispielsweise Mittel zur Scheibenreinigung automatisch eingeschaltet.

Bei einer derartigen Sensoreinrichtung kann das Problem auftreten, daß infolge von großen Temperaturunterschieden zwischen Innen- und Außenseite der Scheibe Kondensat an der Scheiben-innenseite, also zwischen der Sensoreinrichtung und der Scheibe, gebildet wird. Dieses Kondensat, beziehungsweise Schwitzwasser, führt ebenfalls zu einer Verfälschung des Meßergebnisses, da nunmehr an der Scheiben-Innenseite durch die Kondensatbildung die Totalreflexion beeinträchtigt wird. Die bekannten Sensoreinrichtungen weisen daher eine Reflexionsschicht mit einer hochglänzenden Oberfläche auf, die an der Scheiben-Innenseite dichtend mit einem optischen Zwischenmedium angelegt wird, um ein Eindringen von Luft und Kondensat zu verhindern. Die hochglänzende Oberfläche gewährleistet die Totalreflexion. Die Herstellung solcher dichtend an der Scheiben- Innenseite angekoppelten Reflexionsschichten ist jedoch sehr aufwendig und verteuert die Herstellung der Sensoreinrichtung. Darüberhinaus ist diese Reflexionsschicht von außen deutlich erkennbar und macht sich für den Betrachter optisch störend bemerkbar.

Zusätzlich sind die bekannten Sensoreinrichtungen mit einer Heizvorrichtung versehen, um eine Aufheizung der gesamten Sensoreinrichtung auf beispielsweise 40° C zu erreichen. Dies dient zum Auftauen beispielsweise eines Schneebelags an der Scheiben-Außenseite im Bereich der Sensoreinrichtung und zur Verflüchtigung eines partiell gebildeten Kondensats bei nicht vollkommen luftdichter Abkapselung der Reflexionsschicht mit hochglänzender Oberfläche. Trotz der Heizeinrichtung wird daher die möglichst dicht an die Scheiben-Innenseite angelegte hochglänzende Oberfläche benötigt. Derüberhinaus entsteht durch die Aufheizung der gesamten Sensoreinrichtung ein relativ hoher elektrischer Energiebedarf und die Bauteile müssen entsprechend ausgelegt sein.

### Vorteile der Erfindung

Die erfindungsgemäße Sensoreinrichtung mit den Merkmalen des Hauptanspruchs hat demgegenüber den Vorteil, daß eine zusätzliche Reflexionsfläche mit hochglänzender Oberfläche an der Scheiben-Innenseite vollständig entfallen kann, da durch direkte gezielte Beheizung der Scheiben-Innenseite im Bereich der Meßstrecke eine Kondensatbildung verhindert werden kann, so daß die Totalreflexion an der Scheiben-innenseite selbst gewährleistet bleibt. Da nur eine sehr kleine Fläche beheizt wird, ist die benötigte Heizenergie sehr gering. Die Sensoreinrichtung selbst wird nicht unnötig aufgeheizt. Auch der Aufwand für die optische Ankoppelung einer verspiegelten Reflexionsfläche und eine Scheibenvorbehandlung können entfallen. Die Meßstrecke und damit die Sensoreinrichtung ist von außen kaum mehr sichtbar, so daß der optische Eindruck verbessert ist.

Die Heizeinrichtung ist im einfachsten Fall als an der Scheibe im Bereich der Meßstrecke anliegende Heizplatte oder Heizfolie ausgebildet. Diese Heizplatte beziehungsweise diese Heizfolie sollte eine Oberflächenbeschaffenheit aufweisen, die einerseits die Totalreflexion nicht stört und andererseis den gewünschten Wärmekontakt zur Scheibe herstellt. Prinzipiell sind jedoch keine besonderen Erfordernisse für den Kontakt an der Scheibe erforderlich, so daß sowohl eine einfache und kostengünstige Montage als auch eine kostengünstige Herstellung möglich sind.

Durch die in den Unteransprüchen aufgeführten Maßnahmen sind vorteilhafte Weiterbildungen und Verbesserungen der im Anspruch 1 angegebenen Sensoreinrichtung möglich.

Eine vorteilhafte Ausgestaltung betrifft die Heizplatte oder Heizfolie. Durchbrüche, beispielsweise Löcher mit definierter Größe und definiertem Abstand (Perforation) ermöglichen ein rasches Austrocknen eines gegebenenfalls vorhandenen Kondensats auf der inneren Meßstrecke.

Eine einfache und günstige Konstruktion ergibt sich dadurch, daß wenigstens ein Teil des an der Scheibe anliegenden Bodens eines Gehäuses der Sensoreinrichtung als Heizplatte ausgebildet ist. In diesem Falle braucht die Sensoreinrichtung beziehungsweise dieses Gehäuse lediglich an der Scheibe, beispielsweise durch Ankleben befestigt werden. Günstig für den Wärmekontakt ist dabei eine Ausführung, bei der die Heizplatte durch Federmittel federnd an der Scheibe gehalten wird. Dabei können als Federmittel zwei Federn vorgesehen sein, die gleichzeitig als Stromzuführungen für die Heizplatte ausgebildet sind.

Zur Beheizung der Heizplatte oder der Heizfolie ist in dieser vorzugsweise ein Heizdraht integriert. Es ist jedoch auch möglich, die Heizplatte aus einem leitfähigen Kunststoff, insbesondere mit PTC-Charakteristik, herzustellen und direkt einen Heizstrom durchzuleiten. Eine weitere Möglichkeit besteht darin, auf der Heizplatte Heizelemente, wie PTC-Elemente, Heizwiderstände oder dergleichen anzuordnen.

Eine weitere zweckmäßige Möglichkeit besteht darin, in oder an der Scheibe als Heizeinrichtung eine Heizdrahtanordnung anzubringen, beispielsweise nach Art der bekannten heizbaren Heckscheiben. Auch diese Heizdrahtanordnung braucht prinzipiell nur im Bereich der Meßstrecke angeordnet werden, sie kann sich jedoch selbstverständlich auch über die gesamte Scheibe erstrecken.

Um definierte Verhältnisse unabhängig von der jeweiligen Außen- oder Innentemperatur zu erreichen, sind in vorteilhafter Weise ein Temperaturfühler für die Heizeinrichtung und eine Temperaturregeleinrichtung vorgesehen, um die Meßstrecke auf konstanter Temperatur zu halten.

### Zeichnung

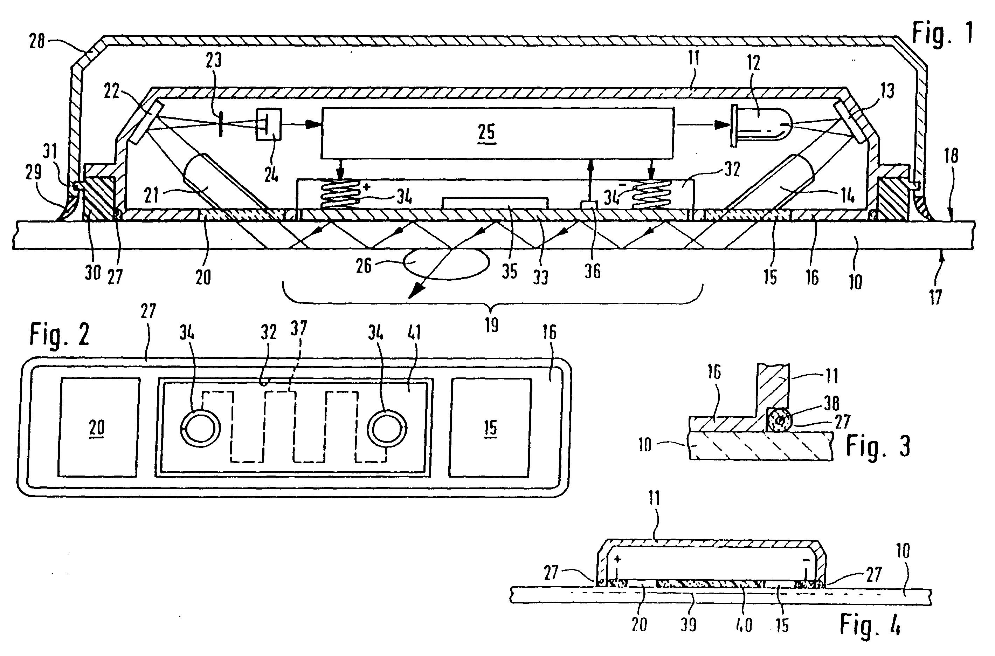

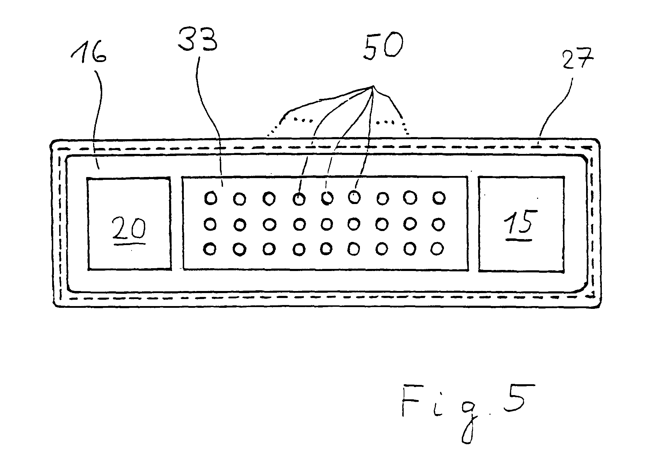

Ausführungsbeispiele der Erfindung sind in der Zeichnung dargestellt und in der nachfolgenden Beschreibung näher erläutert. Es zeigen Figur 1 ein erstes Ausführungsbeispiel einer erfindungsgemäßen Sensoreinrichtung mit einer federnd an der Innenseite der Scheibe angelegten Heizplatte in einer Vertikalschnittdarstellung, Figur 2 die auf die Scheibe aufgelegte Heizplatte gemäß Figur 1 in einer Draufsicht, Figur 3 eine Detaildarstellung einer heizbaren Dichtung, Figur 4 ein Gehäuse für die Sensoreinrichtung mit einer heizbaren, an die Scheibe anlegbaren Bodenplatte und Figur 5 eine Ausgestaltung der an der Scheibe angelegten Heizplatte oder Heizfolie gemäß Figur 1 in einer Draufsicht.

### Beschreibung der Ausführungsbeispiele

Die in den Figuren dargestellte Sensoreinrichtung zur Erfassung des Benetzungs- und/oder Verschmutzungsgrades ist an der Innenseite einer Glasscheibe 10 angeklebt, bei der es sich beispielsweise um die Frontscheibe eines Kraftfahrzeugs handeln kann. Selbstverständlich ist auch eine Anwendung bei anderen Fensterscheiben beziehungsweise durchsichtigen Scheiben möglich, die auch beispielsweise aus einem Kunststoffmaterial bestehen können.

In einem an die Scheibe 10 anlegbaren Gehäuse 11 befindet sich als Strahlungsquelle eine Leuchtdiode 12. Die emittierte Strahlung wird an einem ersten Umlenkspiegel 13 an der Gehäuse-Innenseite umgelenkt und gelangt über ein erstes Prisma 14 und einen transparenten optischen Bereich 15 im an der Scheibe 10 anliegenden Gehäuseboden 16 unter einem Winkel in die Scheibe 10. Durch das Prisma 14 wird die Strahlung parallel ausgerichtet. Der Winkel ist so gewählt, daß in der Scheibe 10 Totalreflexion an der Außenfläche 17 und der Innenfläche 18 auftritt. Nach mehreren Reflexionen in einer Meßstrecke 19 der Scheibe 10 tritt die Strahlung dann wieder an einem zweiten transparenten optischen Bereich 20 im Gehäuseboden 16 aus. Über ein daran angeordnetes Prisma 21 wird die Strahlung so fokussiert, daß sie nach der Umlenkung durch einen zweiten Umlenkspiegel 22 in der Ebene einer im Strahlengang nachgeschalteten Blende 23 ihren Brennpunkt hat. Eine dahinter angeordnete Fotodiode 24 bildet den wesentlichen Teil einer Strahlungsmeßeinrichtung und mißt die Intensität der auftreffenden Strahlung. Die Auswertung der in der Fotodiode 24 empfangenen Strahlung und die Steuerung der Leuchtdiode 12 erfolgen über eine elektronische Steuer- und Meßschaltung 25.

Befinden sich. Wassertropfen 26 oder Schmutzpartikel auf der Scheibe 10 im Bereich der Meßstrecke 19, so wird die Totalreflexion gestört, und ein Teil der Strahlung tritt aus der Scheibe aus, wodurch die Intensität der in der Fotodiode 24 empfangenen Strahlung geschwächt wird. Diese Signalschwächung wird in der Steuer- und Meßschaltung 25 in der Weise ausgewertet, daß unterhalb eines festlegbaren Grenzwerts der Intensität ein Schaltvorgang ausgeführt wird, durch den beispielsweise die Scheibenwischerdes Fahrzeugs eingeschaltet oder ein Verdeck und/oder Seitenscheiben geschlossen werden können. Eine hierfür geeignete Auswerteschaltung ist beispielsweise in der DE-A-23 54 100 oder im eingangs angegebenen Stand der Technik beschrieben.

Das Gehäuse 11 ist am Umfang seiner Anlagefläche an der Scheibe 10 mittels einer Rundschnurdichtung 27 abgedichtet. Weiterhin ist zum Schutz des Gehäuses 11 noch ein größeres Schutzgehäuse 28 über das Gehäuse 11 gesteckt, das zur Scheibe 10 hin mittels einer Lippendichtung 29 abgedichtet ist. Ein elastisches Verbindungselement 30 am Außenumfang des Gehäuses 11 weist einen Rastvorsprung 31 auf, der beim Aufstecken des Schutzgehäuses 28 in eine entsprechende Ausnehmung desselben einrastet.

In einer Ausnehmung 32 des Gehäusebodens 16 ist im Bereich der Meßstrecke 19 eine Heizplatte 33 vorgesehen, die mittels zweier Federn 34 bei an der Scheibe 10 angelegter Sensoreinrichtung gegen diese Scheibe 10 gedrückt wird. Die mit der Scheibe 10 in Kontakt stehende Oberflächenstruktur dieser Heizplatte 33 ist so beschaffen, daß einerseits die Totalreflexion nicht gestört wird und andererseits ein guter Wärmekontakt zur Scheibe hergestellt wird. Eine geeignete Oberflächenstruktur sieht beispielsweise Noppen vor, die als Abstandshalter wirken. Zur Beheizung der Heizplatte 33 ist diese mit einem Heizelement 35 an der von der Scheibe abgewandten Seite versehen. Bei diesem Heizelement 35 - es können auch mehrere sein - handelt es sich beispielsweise um einen Heizwiderstand oder um ein PTC-Element. Die beiden Stromzuführungen für das Heizelement 35 erfolgen über die Federn 34 durch die Steuer- und Meßschaltung 25 oder direkt zum Heizelement 35. Dieser wird weiterhin das Signal eines an der Heizplatte 3 angeordneten Temperatursensors 36 zugeführt. Hierdurch ist eine Temperaturregelung der Heizplatte 33 auf eine annähernd konstante Temperatur von beispielsweise 60° C unabhängig von der Außen- und Innentemperatur der Scheibe 10 möglich. Dies verhindert eine Kondensatbildung an der Innenseite der Scheibe 10 im Bereich der Meßstrecke 19, die das Meßergebnis verfälschen könnte.

In einer einfacheren Ausführungsform kann auch auf einen Temperatursensor 36 verzichtet werden, und das Heizelement 35 wird von einem konstanten Strom gespeist, der jedoch beispielsweise in Abhängigkeit der Außentemperatur eingestellt werden könnte. Neben der Verhinderung einer Kondensatbildung können durch eine solche Heizplatte 33 auch Schlieren oder Schleier auf der Scheibe schneller abgedampft werden.

In Figur 2 ist der von der Rundschnurdichtung 27 umgebene Gehäuseboden 16 in einer Draufsicht dargestellt. Zwischen den beiden transparenten optischen Bereichen 15 und 20 sind die Ausnehmung 32 und eine darin angeordnete Heizplatte 41 dargestellt. Im Unterschied zu Figur 1 ist zur Beheizung der Heizplatte 41 kein äußeres Heizelement 35 vorgesehen, vielmehr besitzt die Heizplatte 41 im Inneren einen Heizdraht 37, der an den beiden als Stromzuführungen dienenden Federn 34 angeschlossen ist.

In einer einfacheren Abwandlung der Sensoreinrichtung gemäß den Figuren 1 und 2 kann die Heizplatte 33 beziehungsweise 41 auch starr im Gehäuseboden 16 unter Wegfall der Federn 34 angeordnet sein. Ebenfalls ist es möglich, eine Heizfolie im Bereich der Meßstrecke 19 am Gehäuseboden 16 anzubringen oder an der entsprechenden Stelle auf die Scheibe 10 aufzubringen.

Gemäß der Darstellung in Figur 3 kann die, Rundschnurdichtung 27 einen Heizdraht 38 enthalten.

Bei dem in Figur 4 dargestellten Ausführungsbeispiel besteht ein Gehäuseboden 40 aus leitfähigem Kunststoff mit PTC-Charakteristik. Eine separate Heizplatte kann daher entfallen. An den Gehäuseboden 40 wird eine Heizspannung angelegt, durch die sich der Gehäuseboden 40 in der gewünschten Weise erhitzt. Weiterhin ist in Figur 4 ein Heizdraht 39 in der Scheibe 10 integriert. Dieser Heizdraht 39 oder einige solcher Heizdrähte überdecken dabei wenigstens die Meßstrecke 19, sie können sich jedoch auch über die Sensoreinrichtung hinaus erstrecken. Derartige in einer Scheibe integrierte Heizdrähte sind beispielsweise bei üblichen beheizten Heckscheiben realisiert. Eine solche Heizung durch einen Heizdraht 39 kann als zusätzliche Beheizung der Meßstrecke 19 dienen, jedoch ist auch eine alleinige Beheizung derselben durch diesen Heizdraht 39 möglich. Eine Kombination mit den zuvor beschriebenen Ausführungsbeispielen ist ebenfalls möglich.

In Figur 5 ist eine vorteilhafte Ausgestaltung entweder der in Figur 1 gezeigten Heizplatte/Heizfolie 33 oder der in Figur 2 gezeigten Heizplatte/Heizfolis 41 oder der in Figur 4 gezeigte, als Heizung ausgebildete Gehäuseboden 40 gezeigt. Das in Figur 5 verwendete Bezugszeichen 33 kann daher durch das Bezugszeichen 41 oder durch das Bezugszeichen 40 ersetzt sein. Die zwischen den beiden transparenten optischen Bereichen 15, 20 angeordnete Heizplatte/Heizfolie 33, 41 oder der Gehäuseboden 40 weist Durchbrüche 50 auf. Die Durchbrüche 50 sind beispielsweise gebohrte Löcher, die einen definierten Durchmesser und vorzugsweise einen definierten Abstand voneinander aufweisen. Die Durchbrüche 50 können als Perforation bezeichnet werden. Anstelle der in Figur 5 gezeigten Bohrlöcher mit kreisrundem Querschnitt sind jegliche andere denkbaren Formen geeignet. Wesentlich ist es, daß die Durchbrüche 50 ein rasches Abtrocknen eines gegebenenfalls vorhandenen Kondensats auf der inneren Meßstrecke, die der inneren Scheibenoberfläche entspricht, ermöglicht.

## Patentansprüche

1. Sensoreinrichtung zur Erfassung des Benetzungs- und/oder Verschmutzungsgrades von Scheiben(10), insbesondere Frontscheiben (10) von Kraftfahrzeugen, mit einer eine Strahlung von der Innenseite der Scheibe (10) aus in die Scheibe (10) abgebenden Strahlungsquelle (12), mit einer die in der Scheibe (10) zwischen Außenfläche und Innenfläche durch Totalreflexion im Verlaufe einer Meßstrecke reflektierte Strahlung erfassenden Strahlungsmeßeinrichtung (24) und mit einer Heizeinrichtung (33, 35; 37, 41), **dadurch gekennzeichnet, daß** die Meßstrecke (19) direkt und gezielt durch die im Bereich der Meßshecke angeordnete Heizeinrichtung (33, 35; 37, 41) an der Berührungsfläche zwischen der Sensoreinrichtung und der Scheibe (10), wobei die an der Scheibe (10) angeordnete Heizeinrichtung (33,3 5; 37, 41) als Heizplatte oder Heizfolie ausgebildet ist, oder in der Scheibe (10) beheizt wird.

2. Sensoreinrichtung nach Anspruch 1, **dadurch gekennzeichnet, daß** die Heizplatte oder Heizfolie als ein Teil des an der Scheibe (10) anliegenden Bodens (16, 40) eines Gehäuses (11) der Sensoreinrichtung ausgebildet ist.

3. Sensoreinrichtung nach Anspruch 1 oder 2, **dadurch gekennzeichnet, daß** die Heizplatte (33, 35) durch elastische Mittel (34) federnd an der Scheibe (10) gehalten wird.

4. Sensoreinrichtung nach Anspruch 3, **dadurch gekennzeichnet, daß** zwei Federn als elastische Mittel (34) als Stromzuführungen für die Heizplatte (33, 35) ausgebildet sind.

5. Sensoreinrichtung nach einem der Ansprüche 1 bis 4, **dadurch gekennzeichnet, daß** in der Heizplatte (37, 41) oder Heizfolie ein Heizdraht (39) vorgesehen ist.

6. Sensoreinrichtung nach einem der Ansprüche 1 bis 4, **dadurch gekennzeichnet, daß** die Heizplatte (40) oder Heizfolie aus einem leitfähigen Kunststoff, insbesondere mit PTC-Charakteristik, besteht.

7. Sensoreinrichtung nach einem der Ansprüche 1 bis 4, **dadurch gekennzeichnet, daß** an der Heizplatte (33, 35) Heizelemente (35), wie PTC-Elemente, Heizwiderstände oder dergleichen angeordnet sind.

8. Sensoreinrichtung nach Anspruch 1, **dadurch gekennzeichnet, daß** die in der Scheibe (10) angeordnete Heizeinrichtung (39) als Heizdrahtanordnung ausgebildet ist.

9. Sensoreinrichtung nach einem der vorhergehenden Ansprüche, **dadurch gekennzeichnet, daß** ein Temperaturfühler (36) für die Heizeinrichtung (33, 35) und eine Temperaturregeleinrichtung vorgesehen sind.

10. Sensoreinrichtung nach Anspruch 1 oder 2, **dadurch gekennzeichnet, daß** die Heizplatte oder Heizfolie (33, 41) oder der als Heizplatte oder -folie ausgebildete Teil des an der Scheibe (10) anliegenden Bodens (40) des Gehäuses (11) der Sensoreinrichtung Durchbrüche (50), vorzugsweise Löcher mit definierter Größe und mit definiertem Abstand, aufweist.

## Claims

1. Sensor device for detecting the degree of wetting and/or contamination of panes of glass (10), especially windscreens (10) of motor vehicles, having a radiation source (12) emitting a radiation into the pane of glass (10) from the inside of the pane of glass (10), having a radiation measuring device (24) detecting the radiation reflected in the course of a measurement path by total reflection in the pane of glass (10) between outer surface and inner surfac , and having a heating device (33, 35; 37, 41), **characterized in that** the measurement path (19) is heated directly and specifically on the contact surface between the sensor device and the pane of glass (10) by the heating device (33, 35; 37, 41) arranged in the region of the measurement path, the heating device (33, 35; 37, 41) which is arranged on the pane of glass (10) being designed as a heating plate or heating film, or the said measurement path is heated in the pane of glass (10).

2. Sensor device according to Claim 1, **characterized in that** the heating plate or heating foil is designed as a part of the base (16, 40), resting on the pane of glass (10), of a housing (11) of the sensor device.

3. Sensor device according to Claim 1 or 2, characerized in that the heating plate (33, 35) is held resiliently on the pane of glass (10) by elastic means (34).

4. Sensor device according to Claim 3, **characterized in that** two springs are designed as elastic means (34) as current supply leads for the heating plate (33, 35).

5. Sensor device according to one of Claims 1 to 4, **characterized in that** a heating wire (39) is provided in the heating plate (37, 41) or heating film.

6. Sensor device according to one of Claims 1 to 4, **characterized in that** the heating plate (40) or heating film consists of a conductive plastic, especially one having a PTC characteristic.

7. Sensor device according to one of Claims 1 to 4, **characterized in that** heating elements (35), such as PTC elements, heating resistors or the like, are arranged on the heating plate (33, 35).

8. Sensor device according to Claim 1, **characterized in that** the heating device (39) arranged in the pane of glass (10) is designed as a heating wire arrangement.

9. Sensor device according to one of the preceding claims, **characterized in that** a temperature sensor (36) for the heating device (33, 35) and a temperature control device are provided.

10. Sensor device according to Claim 1 or 2, **characterized in that** the heating plate or heating film (33, 41) or the part, designed as a heating plate or heating film, of the base (40), resting on the pane of glass (10), of the housing (11) of the sensor device has openings (50), preferably holes of defined size and at defined spacing.

## Revendications

1. Capteur servant à détecter le niveau d'humidification et/ou d'encrassement de vitres (10), en particulier de pare-brise (10) de véhicules à moteur, comprenant une source de rayonnement (12, qui émet à partir du côté intérieur de la vitre (10) un rayonnement dans la vitre (10), un dispositif de mesure du rayonnement (24), qui détecte le rayonnement réfléchi par réflexion totale dans la vitre (10) entre la face extérieure et la face intérieure et un dispositif de chauffage (33, 35; 37, 41),
**caractérisé en ce que**
le dispositif de chauffage (33, 35; 37, 41) installé au niveau de la section mesurée chauffe directement et de façon appropriée la section mesurée (19) sur la surface de contact entre le capteur et la vitre (10) et le dispositif de chauffage (33, 35; 37, 41), qui est disposé sur la vitre (10), est constitué sous la forme d'une plaque de chauffage ou d'une feuille de chauffage.

2. Capteur selon la revendication 1,
**caractérisé en ce que**
la plaque de chauffage ou la feuille de chauffage est constituée comme une partie du fond (16, 40) d'un boîtier (11) du capteur, qui repose sur la vitre (10).

3. Capteur selon la revendication 1,
**caractérisé en ce que**
la plaque de chauffage (33, 35) est maintenue par des moyens élastiques (34) qui font ressort sur la vitre (10

4. Capteur selon la revendication 3,
**caractérisé en ce que**
deux ressorts en tant que moyens élastiques (34) sont constitués comme amenées de courant à la plaque de chauffage (33, 35).

5. Capteur selon l'une des revendications 1 à 4,
**caractérisé en ce que**
dans la plaque de chauffage (37, 41) ou la feuille de chauffage on prévoit un filament de chauffage (39).

6. Capteur selon l'une des revendications 1 à 4,
**caractérisé en ce que**
la plaque de chauffage (40) ou la feuille de chauffage est réalisée en une matière plastique, qui conduit l'électricité, en particulier avec une caractéristique à coefficient positif de température (PTC).

7. Capteur selon l'une des revendications 1 à 4,
**caractérisé en ce que**
sur la plaque de chauffage (33, 35) sont disposés des éléments de chauffage à coefficient positif de température (PTC), des résistances de chauffage ou des éléments analogues.

8. Capteur selon la revendication 1,
**caractérisé en ce que**
le dispositif de chauffage (39), disposé dans la vitre (10), est constitué sous la forme d'un système à filament de chauffage.

9. Capteur selon l'une des revendications précédentes,
**caractérisé en ce que**
l'on prévoit un capteur de température (36) pour le dispositif de chauf-fage (33, 35) et un dispositif de régulation de la température.

10. Capteur selon l'une des revendications 1 ou 2,
**caractérisé en ce que**
la plaque de chauffage ou la feuille de chauffage (33, 41) ou la partie du
fond (40), reposant sur la vitre (10), du boîtier (11) du capteur, qui est constituée sous la forme de plaque de chauffage ou de feuille de chauffage, présente des ajours (50), de préférence des trous d'une grandeur définie et d'un écartement défini les uns par rapport aux autres.
